# EUROPÄISCHE PATENTSCHRIFT

(11) **EP 4 435 238 B1**
(45) Veröffentlichungstag und Bekanntmachung des Hinweises auf die Patenterteilung: **22.04.2026**
(21) Anmeldenummer: 24160082.4
(22) Anmeldetag: 27.02.2024
(51) Int. Cl.: F01K 17/00, F22B 27/00

(54) **VERFAHREN UND DAMPFERZEUGUNGSEINRICHTUNG ZUR ERZEUGUNG VON PROZESSDAMPF**
METHOD AND STEAM GENERATING DEVICE FOR PRODUCING PROCESS STEAM
PROCÉDÉ ET DISPOSITIF DE PRODUCTION DE VAPEUR POUR PRODUIRE DE LA VAPEUR DE TRAITEMENT

(30) Priorität: 14.03.2023 DE 102023106382
(43) Veröffentlichungstag der Anmeldung: 25.09.2024
(73) Patentinhaber: Fraunhofer-Gesellschaft zur Förderung der angewandten Forschung e.V., 80686 München (DE)
(72) Erfinder: BUDT, Marcus, 45359 Essen (DE); KLUTE, Sven, 44807 Bochum (DE)

(56) Entgegenhaltungen:
- DE-A1- 102021 111 918
- JP-A- 2010 164 223
- JP-A- 2013 002 708

## Beschreibung

Die Erfindung betrifft ein Verfahren zur Erzeugung von Prozessdampf unter Verwendung von in Form von Speisewasser rückgeführtem Kondensat. Ferner betrifft die Erfindung eine Dampferzeugungseinrichtung zur Erzeugung von Prozessdampf unter Verwendung von in Form von Speisewasser rückgeführtem Kondensat nach einem solchen Verfahren.

Dampferzeugungseinrichtungen werden regelmäßig zur Erzeugung von Prozessdampf genutzt, der eine Dampfturbine antreiben oder zum Beheizen eines industriellen Prozesses eingesetzt werden kann. Solche industriellen Prozesse können chemische Prozesse oder andere Herstellungsprozesse sein, bei denen an bestimmten Stellen bzw. zur Durchführung bestimmter Verfahrensschritte Wärme benötigt wird. Dies können lediglich beispielsweise Trocknungsprozesse oder dergleichen sein.

Dokument JP 2013-2708 A betrifft eine Dampferzeugungseinrichtung zur Erzeugung von Prozessdampf unter Verwendung von in Form von Speisewasser rückgeführtem Kondensat, mit einem Flash-Tank zum Auftrennen des Speisewassers in eine Dampfphase und eine Flüssigphase, mit einer Abgabevorrichtung an eine Verbrauchereinrichtung zur Bildung eines Kondensats durch Kondensation des Prozessdampfs und mit einer Rückführvorrichtung zum Zuführen von Kondensat.

In der Regel umfassen die Dampferzeugungseinrichtungen einen oder mehrere Dampferzeuger in Form sogenannter Dampfkessel, die mit fossilen oder regenerativen Brennstoffen befeuert werden. Die dabei freigesetzte Verbrennungsenergie und das entstehende heiße Rauchgas werden genutzt, um dem Dampfkessel zugeführtes Speisewasser zu verdampfen. Industriellen Dampfkesseln wird das Speisewasser meist im Überdruck über Rohre zugeführt, so dass einer angeschlossenen Verbrauchereinrichtung kontinuierlich und effizient ein Prozessdampf mit im Wesentlichen konstantem Druck und konstanter Temperatur zugeführt werden kann. Die Art der Verbrauchereinrichtung kann dabei, wie zuvor bereits diskutiert, sehr unterschiedlich ausgestaltet sein. Der Prozessdampf wird in der Verbrauchereinrichtung unabhängig von deren jeweiliger Ausgestaltung jedoch unter Wärmeabgabe kondensiert. Das Kondensat wird meist über eine Rückführvorrichtung zurückgeführt und in eine Speisewasseraufbereitung der Dampferzeugungseinrichtungen geleitet, in der das Kondensat entgast wird. Das so erzeugte Speisewasser wird dann in dem Dampfkessel wieder verdampft und als Prozessdampf erneut der Verbrauchereinrichtung zugeführt.

Um die Energie der Rauchgase im Dampferzeuger möglichst effektiv nutzen und auf das Speisewasser übertragen zu können, ist es wünschenswert, das Speisewasser dem Dampferzeuger mit einer möglichst geringen Temperatur zuzuführen. Dabei können jedoch andere Gründe bestehen, welche einem Unterschreiten bestimmter Temperaturen entgegenstehen. So sollte das Speisewasser beispielsweise zur Vermeidung von Korrosion eine hinreichende Temperatur aufweisen, bei der ein Unterschreiten des Säuretaupunkts des Rauchgases vermieden wird. Ansonsten verlässt das Rauchgas den Dampferzeuger mit einer noch recht hohen Temperatur, mithin mit einer noch recht hohen ungenutzten Wärme. Das Speisewasser fällt jedoch im Falle einer thermischen Entgasung in der Speisewasseraufbereitung auf einem Temperaturniveau von etwas über 100 °C an. Um die Speisewassertemperatur nach dem Entgasen zu senken, sind Wärmetauscher bekannt, in denen das Speisewasser beispielsweise durch Frischwasser gekühlt wird, das anschließend zum Ausgleich von Kondensatverlusten der Speisewasseraufbereitung zugeführt werden kann. Die Kondensatverluste können dabei beispielsweise dadurch entstehen, dass ein Teil des Kondensats zum Entfernen von sich im Wasserkreislauf ansammelnden, nicht flüchtigen Störstoffen abgelassen wird.

Unter einem Dampferzeuger wird grundsätzlich ein solcher verstanden, der insbesondere einen Economiser zum Vorwärmen oder Aufwärmen des Speisewassers, einen Verdampfer zum Verdampfen des vor- und/oder aufgewärmten Speisewassers und einen Überhitzer zum Erhitzen des Dampfs auf eine gewünschte Temperatur oder jedenfalls auf eine Temperatur oberhalb der Sattdampftemperatur aufweisen kann. In einigen Fällen kann jedoch auf den Economiser und/oder den Überhitzer verzichtet werden. Es kann vom Dampferzeuger zudem noch eine Feuerung zum Erzeugen der benötigten Wärme durch Verbrennen eines Brennstoffs umfasst sein. Erforderlich ist dies jedoch nicht. Das Speisewasser wird dabei vorzugsweise im Gegenstrom mit dem Wärmeträgermedium zum Vorwärmen, Aufwärmen, Verdampfen und/oder Überhitzen geführt, wobei das Wärmeträgermedium ein Rauchgas sein kann aber nicht sein muss.

Daher liegt der vorliegenden Erfindung die Aufgabe zugrunde, das Verfahren und die Dampferzeugungseinrichtung jeweils der eingangs genannten und zuvor näher erläuterten Art derart auszugestalten und weiterzubilden, dass eine höhere Effizienz erzielt werden kann.

Diese Aufgabe ist nach Anspruch 1 gelöst durch ein Verfahren zur Erzeugung von Prozessdampf unter Verwendung von in Form von Speisewasser rückgeführtem Kondensat,
- bei dem der Prozessdampf zur Bildung eines Kondensats durch Kondensation des Prozessdampfs an eine Verbrauchereinrichtung abgegeben wird,
- bei dem das Kondensat aus der Verbrauchereinrichtung einer Speisewasseraufbereitung zur Aufbereitung zugeführt wird,
- bei dem Speisewasser aus der Speisewasseraufbereitung in einem Flash-Tank in eine Dampfphase und eine Flüssigphase aufgetrennt wird,
- bei dem die Flüssigphase des Speisewassers in einem Verdampfer unter Bildung eines Rohdampfs verdampft wird,
- bei dem die Dampfphase des Speisewassers und der Rohdampf in wenigstens einem Verdichter unter Bildung von Prozessdampf verdichtet werden.

Die genannte Aufgabe ist ferner gemäß Anspruch 9 gelöst durch eine Dampferzeugungseinrichtung zur Erzeugung von Prozessdampf unter Verwendung von in Form von Speisewasser rückgeführtem Kondensat, mit einem Verfahren nach einem der Ansprüche 1 bis 8, mit einem Flash-Tank zum Auftrennen des Speisewassers in eine Dampfphase und eine Flüssigphase, mit einem Verdampfer zum Verdampfen der Flüssigphase des Speisewassers unter Bildung eines Rohdampfs, mit wenigstens einem Verdichter zum Verdichten der Dampfphase des Speisewassers und des Rohdampfs unter Bildung von Prozessdampf, mit einer Abgabevorrichtung an eine Verbrauchereinrichtung zur Bildung eines Kondensats durch Kondensation des Prozessdampfs, mit einer Rückführvorrichtung zum Zuführen von Kondensat und mit einer Speisewasseraufbereitung zur Aufbereitung des Kondensats unter Bildung des Speisewassers.

Verfahrensmäßig wird also in der Dampferzeugungseinrichtung ein Prozessdampf gebildet und an eine Verbrauchereinrichtung abgegeben, in der die Wärme des Prozessdampfs genutzt und der Prozessdampf infolgedessen kondensiert wird. Das beim Kondensieren des Prozessdampfs in der Verbrauchereinrichtung anfallende Kondensat kann an die Dampferzeugungseinrichtung zurückgeführt werden, in der das Kondensat dann einer Speisewasseraufbereitung zugeführt wird. In der Speisewasseraufbereitung wird das Kondensat aufbereitet, da sich in dem Kondensat ansonsten Störstoffe in unerwünschten Mengen ansammeln könnten. Die Störstoffe sind dabei insbesondere aber nicht zwingend in dem Kondensat gelöste Gase, die beim anschließenden erneuten Verdampfen des Speisewassers Probleme bereiten können. Alternativ oder zusätzlich zu gelösten Gasen können in der Speisewasseraufbereitung aber auch Flüssigkeiten oder Feststoffe abgeschieden werden, und zwar bedarfsweise zusammen mit einem Teil des Kondensats. Der beispielsweise auf diese Art entstehende Verlust an Kondensat kann durch Zugabe von Frischwasser in die Speisewasseraufbereitung ausgeglichen werden.

Das in der Speisewasseraufbereitung entsprechend aufbereitete Kondensat wird als Speisewasser bezeichnet und aus der Speisewasseraufbereitung in einen Flash-Tank geleitet, in dem der Druck des Speisewassers herabgesetzt wird. Infolgedessen wird ein Teil des aufbereiteten Speisewassers verdampft und bildet eine Dampfphase in dem Flash-Tank aus. Der nicht verdampfte Teil des Speisewassers bildet die Flüssigphase in dem Flash-Tank. Durch das teilweise Verdampfen des Speisewassers wird dem Speisewasser Wärme entzogen, so dass die Dampfphase und die Flüssigphase des Speisewassers eine Temperatur aufweisen, die deutlich unterhalb der Temperatur des Speisewassers in der Speisewasseraufbereitung liegt. Die Temperatur des Speisewassers lässt sich im Flash-Tank so weit reduzieren, dass die Flüssigphase durch eine Wärmequelle auf geringem Temperaturniveau in einem Verdampfer verdampft werden kann. Der Verdampfer kann dabei der Einfachheit halber in Form eines Wärmetauschers, insbesondere in Form eines Rohrbündelwärmetauschers oder eines Plattenwärmetauschers, ausgebildet sein, wobei die Wärmequelle durch eine Flüssigkeit und/oder ein Gas gebildet werden kann. Dabei kann es sich um einen Prozessstrom handeln, dessen Wärme infolge des geringen Temperaturniveaus nicht sinnvoll anderweitig genutzt werden kann. Verfahrensgemäß kann die Wärme des Prozessstroms aber zur Verdampfung der Flüssigphase des Speisewassers genutzt werden, welche in dem Flash-Tank auf eine bestimmte Temperatur, insbesondere unterhalb der Temperatur der Wärmequelle, abgekühlt werden kann.

Durch das Verdampfen der Flüssigphase des Speisewassers kann diese ansonsten nicht oder weniger effektiv nutzbare Wärme aufnehmen. Der dabei entstehende Rohdampf weist aber seinerseits ein Temperaturniveau auf, das dann ebenfalls einer sinnvollen Nutzung des Rohdampfs im Wege steht. Aus diesem Grunde wird der Rohdampf in wenigstens einem Verdichter verdichtet, was zwangsweise zu einem Aufheizen des Rohdampfs führt, der beim Verlassen des Verdichters als energetisch nutzbarer Prozessdampf zur Verfügung steht.

Ebenso wird die Dampfphase des Speisewassers aus dem Flash-Tank wenigstens einem Verdichter zugeführt, um das Druckniveau und das Temperaturniveau der Dampfphase anzuheben und auf diese Weise einen energetisch sinnvoll nutzbaren Prozessdampf zu erzeugen. Dabei kann die Dampfphase des Speisewassers aus dem Flash-Tank und der Rohdampf aus dem Verdampfer erst zusammengeführt und dann gemeinsam in wenigstens einem Verdichter verdichtet werden. Die Dampfphase des Speisewassers aus dem Flash-Tank und der Rohdampf aus dem Verdampfer können aber auch in unterschiedlichen Verdichtern separat voneinander verdichtet werden. Welche Variante hier bevorzugt ist, kann unter anderem davon abhängen, welche Mengen an Dampf in dem Flash-Tank und in dem Verdampfer gebildet werden.

Insbesondere zur Durchführung des zuvor beschriebenen Verfahrens weist die Dampferzeugungseinrichtung einen Flash-Tank zum Auftrennen des Speisewassers in eine Dampfphase und eine Flüssigphase auf. Dabei wird die Dampfphase im Flash-Tank durch das Entspannen des aufbereiteten Speisewassers gebildet. Die verbleibende, in dem Flash-Tank abgekühlte Flüssigphase des Speisewassers wird in einem Verdampfer durch den Wärmetausch mit einer Wärmequelle auf einem Temperaturniveau oberhalb der Temperatur der Flüssigphase aus dem Flash-Tank unter Bildung eines Rohdampfs verdampft. Zudem ist wenigstens ein Verdichter vorgesehen, in dem die Dampfphase aus dem Flash-Tank und der Rohdampf aus dem Verdampfer verdichtet und erhitzt werden. Die Dampfphase und der Rohdampf können dabei wenigstens teilweise gemeinsam und/oder wenigstens teilweise separat voneinander in einem Verdichter oder in mehreren Verdichtern verdichtet werden. Der wenigstens eine Verdichter dient mithin der Bildung von wenigstens einem Prozessdampf. Die Dampferzeugungseinrichtung umfasst ferner eine Abgabevorrichtung zur Abgabe des wenigstens einen Prozessdampfs an eine Verbrauchereinrichtung und eine Rückführvorrichtung zum Zuführen von Kondensat aus der Verbrauchereinrichtung in die Verdampfungseinrichtung auf. Letztlich ist auch eine Speisewasseraufbereitung vorgesehen, die der Aufbereitung des zurückgeführten Kondensats vor dessen erneuter Verdampfung in der Verdampfungseinrichtung und so der Bildung von Speisewasser dient.

Vorliegend kommen als Verdichter grundsätzlich alle bekannten Arten von Verdichtern in Frage. Insbesondere sind dies Turboverdichter, Kolbenverdichter und Schraubenverdichter.

Nachfolgend werden das Verfahren und die Dampferzeugungseinrichtung zusammen beschrieben, ohne zwingend jeweils im Einzelnen zwischen dem Verfahren und der Dampferzeugungseinrichtung zu unterscheiden. Für den Fachmann ergibt sich jedoch aus dem jeweiligen Kontext, welche Merkmale in Bezug auf das Verfahren und die Dampferzeugungseinrichtung besonders bevorzugt sind.

Bei einer ersten besonders bevorzugten Ausgestaltung des Verfahrens wird das Kondensat in der Speisewasseraufbereitung wenigstens teilweise entgast. Im Speisewasser enthaltene Gase können den Dampferzeuger beschädigen. Dabei können insbesondere Sauerstoff (02) und/oder Kohlendioxid (CO2) ein Problem darstellen bzw. in größeren Mengen im Kondensat des Prozessdampfs enthalten sein. Daher wird in vielen Fällen bevorzugt Sauerstoff (02) und/oder Kohlendioxid (CO2) in der Speisewasseraufbereitung aus dem Kondensat ausgetrieben.

Zum Entgasen des Kondensats in der Speisewasseraufbereitung kann es unabhängig von den auszutreibenden Gasen zweckmäßig sein, wenn das Kondensat der Speisewasseraufbereitung zusammen mit einem Heizdampf zugeführt wird. Der Heizdampf heizt das Kondensat, insbesondere direkt, auf. Infolge der hohen Temperatur werden die Gase aus dem Speisewasser ausgetrieben und vorzugsweise zusammen mit dem Brüden aus Heizdampf und/oder verdampftem Kondensat aus der Speisewasseraufbereitung abgezogen.

Um das Aufbereiten des Kondensats zur Gewinnung von Speisewasser ebenso wie das Beheizen des industriellen Prozesses mit Prozessdampf energetisch effizient zu gestalten, bietet es sich an, wenn das Kondensat der Speisewasseraufbereitung mit einer Temperatur zwischen 60 ° und 100 °C, vorzugsweise zwischen 70 °C und 80 °C, insbesondere von wenigstens im Wesentlichen 80 °C, zugeführt wird. Je höher die Temperatur des Kondensats, desto weniger Heizdampf wird zu dessen Aufbereitung benötigt. Je geringer die Temperatur des Kondensats ist, desto größer ist die Wärmemenge, die an den zu beheizenden industriellen Prozess abgegeben werden kann. Des Weiteren sind Wärmeverluste entlang der Leitungslängen zu berücksichtigen.

Alternativ oder zusätzlich kann das Kondensat aus denselben Gründen in der Speisewasseraufbereitung bei einem Druck zwischen 1 bar und 2 bar, vorzugsweise zwischen 1,1 und 1,5 bar, insbesondere von wenigstens im Wesentlichen 1,2 bar aufbereitet werden. Je geringer der Druck, desto mehr Wärme kann an den industriellen Prozess abgegeben werden. Ein gewisser Druck ist jedoch erforderlich, um das Kondensat hinreichend zu entgasen und um ein hinreichendes Entspannen des Speisewassers im Flash-Tank sicherzustellen. Daher beträgt die Temperatur des Speisewassers in der Speisewasseraufbereitung bevorzugt über 100 °C, wobei bei einer Temperatur zwischen 102 °C und 108 °C, insbesondere bei wenigstens im Wesentlichen 105 °C, wenig Heizdampf benötigt wird. Gleichzeitig kann im Flash-Tank eine hinreichende Entspannung und Temperaturabsenkung sichergestellt werden.

Um die Flüssigphase des Speisewassers auf insgesamt wirtschaftliche Weise hinreichend abzukühlen, bietet es sich grundsätzlich an, wenn der Flash-Tank bei einem absoluten Druck zwischen 0,07 bar und 0,9 bar betrieben wird. Je geringer der Druck ist, desto kältere Wärmequellen können im Verdampfer zum Verdampfen der Flüssigphase des Speisewassers genutzt werden. Dabei kann es besonders bevorzugt sein, wenn der Flash-Tank bei einem Druck zwischen 0,12 bar und 0,8 bar betrieben wird, wobei in vielen Fällen ein Druck von wenigstens im Wesentlichen 0,2 bar oder 0,6 bar einen recht guten Kompromiss darstellen wird. Aus den zuvor im Zusammenhang mit dem Druck genannten Gründen und vor dem Hintergrund, dass der Druck und die Temperatur im Flash-Tank voneinander abhängen, wird es sich alternativ oder zusätzlich anbieten, wenn der Flash-Tank bei einer Temperatur zwischen 40 °C und 96 °C, vorzugsweise zwischen 50 °C und 93,5 °C, betrieben wird. Eine Verdampfung der Flüssigphase des Speisewassers auf einem geringen Temperaturniveau wird in vielen Fällen bei einer Temperatur von wenigstens im Wesentlichen 60 °C oder 85,9 °C wirtschaftlich möglich sein.

Um den Druck im Flash-Tank auf ein Druckniveau abzusenken, das unterhalb des Druckniveaus in der Speisewasseraufbereitung und insbesondere auch unterhalb des Umgebungsdrucks liegt, bietet es sich der Einfachheit halber an, wenn der Verdichter im Flashtank einen entsprechenden Unterdruck zieht. Der Druck im Flash-Tank ist dabei so gering einzustellen, dass er wenigstens unterhalb des Drucks in der Speisewasseraufbereitung liegt. Andernfalls kann keine teilweise Verdampfung des Speisewassers bei gleichzeitigem Abkühlen desselben im Flash-Tank sichergestellt werden.

Unabhängig davon ist es für viele Anwendungsfälle zweckdienlich, wenn der Verdichter einen Prozessdampf mit einer Temperatur zwischen 100 °C und 450 °C erzeugt. **In** diesen Fällen kommen die genannten Vorteile des Verfahrens zudem besonders zum Tragen. Dies gilt umso mehr, wenn die Temperatur des Prozessdampfs zwischen 100 °C und 250 °C beträgt. Ein guter Kompromiss, der einen effizienten Einsatz der Dampferzeugungseinrichtung erlaubt, wird in vielen Fällen bei einer Temperatur des Prozessdampfs von wenigstens im Wesentlichen 200 °C liegen.

Der Heizdampf kann der Speisewasseraufbereitung zum Zwecke des, insbesondere direkten, Beheizens des Kondensats einfach und wirtschaftlich unter Verwendung wenigstens eines Prozessdampfs und/oder des Rohdampfs bereitgestellt werden. Eine externe Wärmequelle wird dann nicht benötigt. Dies ist in besonderem Maße der Fall, wenn der wenigstens eine Prozessdampf und/oder der wenigstens eine Rohdampf zur Bildung des Heizdampfs wenigstens teilweise über eine Drossel gedrosselt wird.

**In** vielen Fällen fallen in industriellen Anlagen, insbesondere in industriellen Prozessen, Fluide auf einem so niedrigen Temperaturniveau an, dass die in den Fluiden enthaltene Wärme kaum sinnvoll genutzt werden kann. Daher bietet es sich an, die Flüssigphase des Speisewassers in dem Verdampfer durch Wärmetausch mit einer Wärmequelle, insbesondere in Form eines Wärmeträgermediums, zu verdampfen, dessen Temperaturniveau oberhalb des Temperaturniveaus der Flüssigphase im Flash-Tank und unterhalb des Temperaturniveaus des Speisewassers in der Speisewasseraufbereitung liegt. Als Wärmeträgermedien bieten sich dabei insbesondere das aufbereitete Speisewasser, Medien aus Biomasseanlagen und/oder Wärmepumpen und/oder ein Geothermalfluid an. Grundsätzlich können, insbesondere bisher in der Regel nicht zweckmäßig nutzbare, Abwärmeströme zweckmäßig genutzt werden. Unter einem Geothermalfluid wird ein solches verstanden, dessen Wärme insbesondere unter Nutzung von Geothermie bereitgestellt wird. Dabei kann das Geothermalfluid sowohl natürlich vorkommendes Untergrundwasser als auch ein nachträglich, oberirdisch eingebrachtes Medium sein. In beiden Fällen wird das Medium durch das Untergrundreservoir aufgeheizt und an der Oberfläche thermisch verwertet und dabei abgekühlt. Die Aufheizung kann hierbei direkt bei der Durchströmung des Gesteins oder indirekt über ein geschlossenes, abgetrenntes System erfolgen. Die Nutzung eines Geothermalfluids zum Verdampfen der Flüssigphase des Speisewassers kann deshalb in besonderem Maße bevorzugt sein, weil zwar an vielen Orten geothermale Wärmereservoire zur Verfügung stehen, diese aber unter Umständen nur verhältnismäßig geringe Temperaturniveaus aufweisen. Eine Verdampfung des Speisewassers wäre ansonsten nur durch ein Erwärmen des Geothermalfluids möglich. Bei Verwendung eines Geothermalfluids ist die zu übertragende Wärme jedoch begrenzt, da das Geothermalfluid maximal bis nahezu auf die Speisewassertemperatur abgekühlt werden kann.

Als Geothermalfluide kommen mithin insbesondere solche in Frage, die mittels Geothermie auf eine Temperatur mindestens 40 °C, vorzugsweise mindestens 60 °C aufgeheizt worden sind. Solche Geothermalfluide können vorliegend verglichen mit anderen Verfahren sehr effizient und wirtschaftlich zur Erzeugung von Prozessdampf genutzt werden. Dies ist insbesondere für Geothermalfluide mit einer Temperatur von mindestens 80 °C der Fall. Das Geothermalfluid ist zudem aufgrund des Wärmetransports vorzugsweise eine Flüssigkeit.

Bedarfsweise kann in der Verdampfungseinrichtung neben dem durch den wenigstens einen Verdichter bereitgestellten Prozessdampf noch ein Prozessdampf unter Verwendung von wenigstens einem Dampfkessel und/oder wenigstens einem Abhitzekessel erzeugt werden. Ein Dampfkessel umfasst typischerweise einen Economiser zum Vorwärmen oder Aufwärmen des Speisewassers, einen Verdampfer zum Verdampfen des vor- und/oder aufgewärmten Speisewassers und einen Überhitzer zum Erhitzen des Dampfs auf eine gewünschte Temperatur oder jedenfalls auf eine Temperatur oberhalb der Sattdampftemperatur. In einigen Fällen kann jedoch auf den Economiser und/oder den Überhitzer verzichtet werden. Der Dampfkessel wird zudem durch eine Feuerung befeuert, in der Brennstoff zur Bildung eines Rauchgases verbrannt wird. Das Speisewasser wird dabei vorzugsweise im Gegenstrom mit dem Rauchgas zum Vorwärmen, Aufwärmen, Verdampfen und/oder Überhitzen geführt. In einem Abhitzekessel können ebenso ein Economiser zum Vorwärmen oder Aufwärmen des Speisewassers, ein Verdampfer zum Verdampfen des vor- und/oder aufgewärmten Speisewassers und ein Überhitzer zum Erhitzen des Dampfs auf eine gewünschte Temperatur oder jedenfalls auf eine Temperatur oberhalb der Sattdampftemperatur vorgesehen sein. Ein Abhitzekessel wird jedoch nicht wie ein Dampfkessel mit zum Zwecke des Betriebs des Dampfkessels erzeugtem Rauchgas beheizt, sondern mit einem heißem Abgas oder einem anderen heißen Fluid aus einem vorgeschalteten Prozess, das dort beispielsweise ohnehin als Abhitze transportierender Abhitzestrom anfällt.

Dem Dampfkessel kann ein Teil des in der Speisewasseraufbereitung aufbereiteten Speisewassers zugeführt werden. Um die Wärme des Rauchgases, welches das Speisewasser in dem Dampfkessel beheizt, möglichst vollständig ausnutzen zu können, bietet es sich aber insbesondere an, wenn dem Dampfkessel ein Teil der Flüssigphase des Speisewassers aus dem Flash-Tank zum Verdampfen zugeführt wird. Die im Flash-Tank abgekühlte Flüssigphase kann dem Rauchgas im Dampfkessel mithin mehr Wärme entziehen, insbesondere für den Fall, dass das Rauchgas und die Flüssigphase des Speisewassers aus dem Flash-Tank im Gegenstrom geführt werden.

Der im Dampfkessel gebildete Prozessdampf kann dann mit dem in dem wenigstens einen Verdichter gebildeten Prozessdampf zusammengeführt und dann über die Abgabevorrichtung an die Verbrauchereinrichtung abgegeben werden. Der mittels des Dampfkessels gebildete Prozessdampf und der mittels des wenigstens einen Verdichters gebildete Prozessdampf können jedoch auch separat an die Verbrauchereinrichtung abgegeben werden. Jeder der genannten Prozessdämpfe kann aber auch wenigstens teilweise über eine Drossel gedrosselt und dann als Heizdampf der Speisewasseraufbereitung zugeführt werden. Dabei bietet es sich grundsätzlich an, wenn der in dem wenigstens einen Dampfkessel gebildete Prozessdampf eine Temperatur von wenigstens 140 °C, vorzugsweise wenigstens 150 °C, insbesondere wenigstens 160 °C aufweist, um in einer Verbrauchereinrichtung der industriellen Anlage zweckmäßig genutzt werden zu können. Alternativ oder zusätzlich beträgt die Temperatur des im wenigstens einen Dampfkessel erzeugten Prozessdampfs weniger als 450 °C, vorzugsweise weniger als 250 °C und insbesondere weniger als 200 °C, um die Wärme für eine Verbrauchereinrichtung besonders wirtschaftlich bereitstellen zu können.

Bei einer ersten Ausgestaltung der Dampferzeugungseinrichtung, die besonders bevorzugt ist, weist die Speisewasseraufbereitung eine Heizdampfzuleitung zum Zuführen von Heizdampf auf, über die Heizdampf zum Beheizen des Kondensats und Aufbereiten des Kondensats in der Speisewasseraufbereitung zugeführt werden kann. Dabei sind die Aufbereitung und das Beheizen besonders einfach und wirkungsvoll möglich, wenn die Speisewasseraufbereitung zu einem direkten Aufheizen des Kondensats mit dem Heizdampf ausgebildet ist. Alternativ oder zusätzlich kann die Speisewasseraufbereitung mit einer Brüdenableitung ausgestattet sein, über die aus dem Kondensat in der Speisewasseraufbereitung ausgetriebene Gase abgeführt werden können. Dies kann, insbesondere bei einem direkten Beheizen des Kondensats mit dem Heizdampf, zusammen mit Dampf, mithin Brüden, erfolgen. Zwingend ist dies jedoch nicht.

Unabhängig davon kann der Heizdampfzuleitung eine Drossel zur Bildung von Heizdampf durch Drosselung von Prozessdampf zugeordnet sein. Auf diese Weise lässt sich der Speisewasseraufbereitung einfach und wirtschaftlich eine hinreichende Menge an Heizdampf zuführen.

Zur apparativen Vereinfachung der Dampferzeugungseinrichtung kann es sich zudem anbieten, wenn eine Zusammenführung zum Zusammenführen der Dampfphase des Speisewassers aus dem Flash-Tank und dem Rohdampf aus dem Verdampfer vorgesehen ist. Dann können die Dampfphase und der Rohdampf zusammen dem wenigstens einen Verdichter zur Erzeugung von Prozessdampf zugeführt werden.

Der Verdampfer kann eine Zuleitung für Kondensat zum Verdampfen der Flüssigphase des Speisewassers durch Wärmetausch mit dem über die Zuleitung zugeführten Kondensat aufweisen. Das Kondensat kann dann einfach und effektiv auch zur Verdampfung der Flüssigphase in dem Verdampfer genutzt werden. Alternativ oder zusätzlich weist der Verdampfer eine Zuleitung für Speisewasser zum Verdampfen der Flüssigphase des Speisewassers durch Wärmetausch mit dem über die Zuleitung zugeführten Speisewasser auf. Dann kann das höhere Temperaturniveau des Speisewassers gegenüber dem Kondensat ausgenutzt werden. Der Verdampfer kann aber auch eine Zuleitung für Geothermalfluid aufweisen, wie dies zuvor bereits definiert worden ist. Das Geothermalfluid kann dann energetisch zur Verdampfung der Flüssigphase des Speisewassers aus dem Flash-Tank genutzt werden, wenn das Temperaturniveau hinreichend über dem Temperaturniveau der Flüssigphase des Speisewassers aus dem Flash-Tank liegt.

Die Nutzung eines Geothermalfluids zum Verdampfen der Flüssigphase des Speisewassers kann deshalb in besonderem Maße bevorzugt sein, weil zwar an vielen Orten geothermale Wärmereservoire zur Verfügung stehen, diese aber nur verhältnismäßig geringe Temperaturniveaus aufweisen. Die Temperaturniveaus liegen meist, insbesondere deutlich, unter 130 °C. Die Wärmereservoire kommen daher unter wirtschaftlichen Bedingungen zur Erzeugung von Prozessdampf mittels anderer Verfahren nicht oder nur sehr bedingt in Frage.

Als Geothermalfluide kommen mithin insbesondere solche in Frage, die mittels Geothermie auf eine Temperatur von mindestens 40 °C, vorzugsweise mindestens 60 °C, aufgeheizt worden sind. Solche Geothermalfluide können vorliegend vergleichsweise mit anderen Verfahren sehr effizient und wirtschaftlich zur Erzeugung von Prozessdampf genutzt werden. Dies ist insbesondere für Geothermalfluide mit einer Temperatur von mindestens 80 °C der Fall. Das Geothermalfluid ist zudem aufgrund des Wärmetransports vorzugsweise eine Flüssigkeit.

Nachfolgend wird die Erfindung anhand einer lediglich ein Ausführungsbeispiel darstellenden Zeichnung näher erläutert. In der Zeichnung zeigt
- Fig. 1: eine industrielle Anlage zur Durchführung eines industriellen Prozesses mit einer erfindungsgemäßen Dampferzeugungseinrichtung in einer schematischen Ansicht,
- Fig. 2: die Dampferzeugungseinrichtung aus Fig. 1 in einer schematischen Detaildarstellung und
- Fig. 3: eine alternative Dampferzeugungseinrichtung in einer schematischen Detaildarstellung.

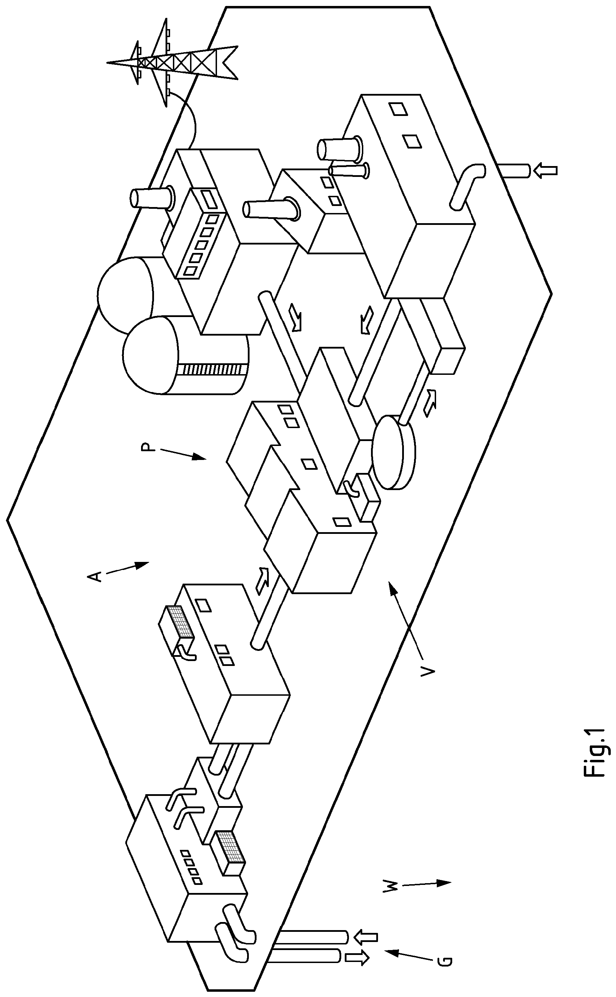

In der Fig. 1 ist beispielhaft eine industrielle Anlage A zur Durchführung eines industriellen Prozesses P dargestellt. Es handelt sich bei der dargestellten und insoweit bevorzugten industriellen Anlage A um eine Papierproduktionsanlage, in welcher der industrielle Prozess P der Papierherstellung durchgeführt wird. Alternativ kämen im Zusammenhang mit der Erfindung aber auch viele andere industrielle Anlagen A zur Durchführung unterschiedlicher industrieller Prozesse P in Frage, wobei die industriellen Prozesse P insbesondere solche sind, die einen nicht unerheblichen Wärmebedarf aufweisen. Die Papierherstellung zeichnet sich dabei durch einen besonders hohen Wärmebedarf aus, da die Papierherstellung grundsätzlich recht energieintensiv ist. Die industrielle Anlage A wird teilweise mittels Geothermie beheizt. Dabei wird ein Geothermalfluid G aus einem unterirdisch im Erdreich vorhandenen Reservoir W gefördert, in welchem das Geothermalfluid G Wärme aufgenommen hat. Das Geothermalfluid G wird nach thermischer Nutzung in der industriellen Anlage A wieder in das unterirdische Reservoir zurückgeführt. Als thermische Nutzung wird die Wärmeabgabe in einem Wärmeübertrager der industriellen Anlage A verstanden. Das Geothermalfluid G, das vorliegend deswegen als solches bezeichnet wird, weil es seine Wärme wenigstens teilweise aus Geothermie bezieht, kann dann zum Beheizen des industriellen Prozesses P in der industriellen Anlage A genutzt werden. Denkbar wäre jedoch, dass das Geothermalfluid zunächst einen Teil seiner Wärme auf ein Transportfluid überträgt, das dann anstelle des Geothermalfuids selbst in der industriellen Anlage A thermisch genutzt wird. Mithin wird bei Verwendung des Transportfluids die Wärme vom Geothermalfluid indirekt auf die industrielle Anlage A übertragen.

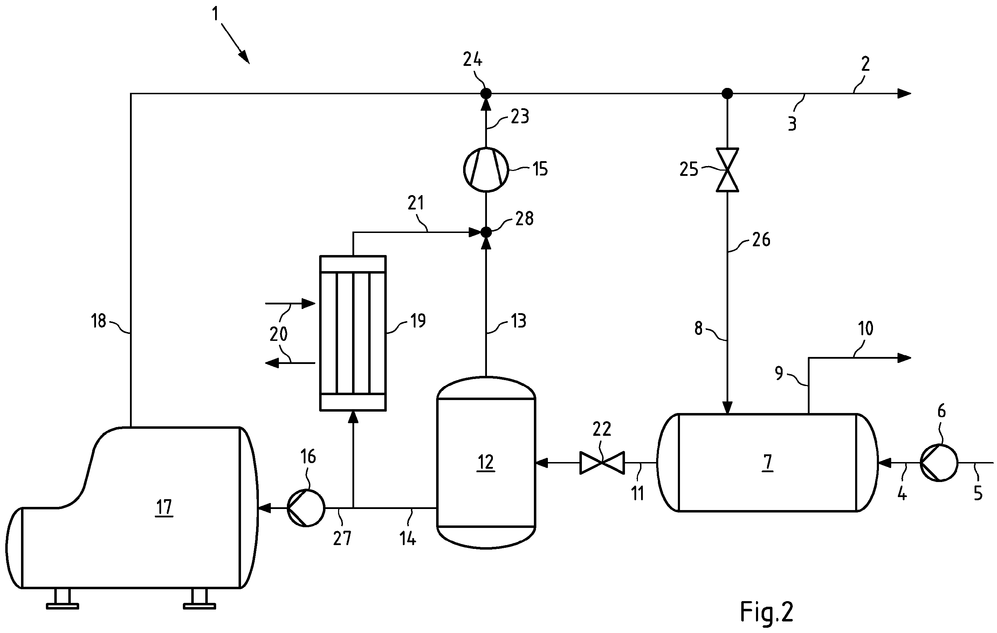

In der Fig. 2 ist eine Dampferzeugungseinrichtung 1 dargestellt, die über eine Abgabevorrichtung 2 einer Verbrauchereinrichtung V der industriellen Anlage A die benötigte Wärme bereitstellt. Die Wärme wird dabei in Form von Prozessdampf 3 im industriellen Prozess P der Papierherstellung genutzt. Durch die Nutzung des Prozessdampfs 3 als Wärmequelle in der entsprechenden Verbrauchereinrichtung V des industriellen Prozesses P wird der Prozessdampf 3 wenigstens teilweise kondensiert und das dabei anfallende Kondensat 4 über eine Rückführvorrichtung 5 in die Dampferzeugungseinrichtung 1 zurückgeführt. Der Prozessdampf 3 bzw. das Kondensat 4 wird also wenigstens im Wesentlichen im Kreis geführt, wenn auch in unterschiedlichen Aggregatszuständen. Dabei sind bei der dargestellten und insoweit bevorzugten Dampferzeugungseinrichtung 1 die Abgabevorrichtung 2 und die Rückführvorrichtung 5 in Form einer Leitung, konkret einer Abgabeleitung und einer Rückführleitung ausgebildet. Die Verbrauchereinrichtung V ist in der Fig. 2 nicht dargestellt, da die konkrete Ausgestaltung der Verbrauchereinrichtung V vorliegend von keiner besonderen Bedeutung ist.

Das über die Rückführvorrichtung 5 zurückgeführte Kondensat 4 wird über eine Kondensatpumpe 6 in eine Speisewasseraufbereitung 7 geleitet, wo das Kondensat 4 mittels direktem Wärmeaustausch mit ebenfalls zugeführtem Heizdampf 8 erwärmt wird, und zwar im vorliegenden Fall von 80 °C auf 105 °C. Der Druck in der Speisewasseraufbereitung 7 ist dabei derart, dass in der Speisewasseraufbereitung 7 eine Dampfphase 9 vorherrscht, in die im Kondensat gelöste Gase, insbesondere Sauerstoff (O₂) und Kohlendioxid (CO₂), ausgetrieben werden. Die Dampfphase 9 wird zusammen mit den ausgetriebenen Gasen über eine Brüdenableitung 10 abgeführt. Es verbleibt in der Speisewasseraufbereitung 7 ein entsprechend aufbereitetes Kondensat 4 in Form von Speisewasser 11. Das Speisewasser 11 wird aus der Speisewasseraufbereitung 7 an einen Flash-Tank 12 abgegeben, in dem das Speisewasser 11 derart entspannt wird, dass im Flash-Tank 12 ein Teil des aufbereiteten Speisewassers 11 verdampft und so das Speisewasser 11 herunterkühlt. Im Flash-Tank 12 werden auf diese Weise eine Dampfphase 13 des Speisewassers 11 und eine Flüssigphase 14 des Speisewassers 11 gebildet, die beide eine deutlich geringere Temperatur aufweisen als das aufbereitete Speisewasser 11 in der Speisewasseraufbereitung 7.

In der dargestellten und insoweit bevorzugten Dampferzeugungseinrichtung 1 wird im Flash-Tank 12 mittels eines Verdichters 15 ein Unterdruck gezogen, wobei sich der Flash-Tank 12 entsprechend auf der Saugseite des Verdichters 15 befindet. Der Druck im Flash-Tank 12 liegt dabei nicht nur unter dem Druck in der Speisewasseraufbereitung 7, sondern auch unterhalb des Umgebungsdrucks. Es handelt sich also um einen absoluten Druck von unter 1 bar. Die im Flash-Tank 12 verbleibende Flüssigphase 14 des Speisewassers 11 wird dann mittels einer Speisewasserpumpe 16 in einer Rücklaufleitung 27 in einen Dampfkessel 17 gepumpt, in dem das Speisewasser 11 auf an sich bekannte Weise verdampft wird. Selbstverständlich können auch zwei oder mehr Dampfkessel 17 vorgesehen sein, die dann bevorzugt parallel betrieben werden.

In dem Dampfkessel 17 wird ein Brennstoff unter Bildung eines Rauchgases verbrannt. Das Rauchgas wird entlang von Rohrleitungen geführt, in denen das Speisewasser 11 im Gegenstrom zum Rauchgas geführt und auf diese Weise zunächst erwärmt und sodann verdampft, sowie bedarfsweise überhitzt wird. Das Speisewasser 11 steht dabei unter einem absoluten Überdruck, so dass das Speisewasser 11 im Dampferzeuger 17 in einen Prozessdampf 18 umgesetzt wird, der zweckmäßig als Wärmequelle für die Beheizung des industriellen Prozesses P in der Verbrauchereinrichtung V genutzt werden kann.

Die Flüssigphase 14 des Speisewassers aus dem Flash-Tank 12 wird an einen Verdampfer 19 abgegeben, in dem die Flüssigphase 14 durch Wärmetausch mit einem Wärmeträgermedium 20 verdampft wird und so einen Rohdampf 21 bildet. Das Wärmeträgermedium 20 wird bei der dargestellten und insoweit bevorzugten Druckerzeugungseinrichtung bevorzugt aus einem Geothermalfluid, einem anderweitigen Abwärmeström, Speisewasser und/oder einem Wärmeträgermedium einer Biomasseanlagen und/oder einer Wärmepumpen gebildet.

Die im Flash-Tank 12 infolge des Entspannens des aufbereiteten Speisewassers 11 über eine Drossel 22 gebildete Dampfphase 13 des Speisewassers 11 wird in einer Zusammenführung 28 mit dem Rohdampf zusammengeführt. Der sich aus dem Rohdampf 21 und der Dampfphase 13 des Speisewassers 11 zusammensetzende Dampf wird dann in dem Verdichter 15 verdichtet, wobei der Dampf nicht nur komprimiert, sondern auch erhitzt wird, so dass der Verdichter einen weiteren Prozessdampf 23 bildet, der bei der dargestellten und insoweit bevorzugten Druckerzeugungseinrichtung über eine Zusammenführung 24 mit dem Prozessdampf 18 aus dem Dampfkessel 17 vereinigt wird. Der Prozessdampf 18 aus dem Dampfkessel 17 und der Prozessdampf 23 aus dem Verdichter 15 weisen bei dem dargestellten und insoweit bevorzugten Verfahren in etwa denselben Druck auf. Auch können die Temperaturen in etwa dieselben sein. Ein Teil des entsprechend zusammengeführten Prozessdampfs 3 kann über eine Drossel 25 und eine Heizdampfzuleitung 26 in Form von Heizdampf 8 in die Speisewasseraufbereitung 7 geführt werden, um das Kondensat 4 darin aufzuheizen. Der nicht zur Bildung von Heizdampf 8 benötigte Teil des Prozessdampfs 3 wird dann über die Abgabevorrichtung 2 in Form einer Abgabeleitung an die Verbrauchereinrichtung V abgegeben, bevor der kondensierte Prozessdampf 3 später wieder als Kondensat 4 über die Rückführeinrichtung in die Dampferzeugungseinrichtung 1 zurückgeführt wird.

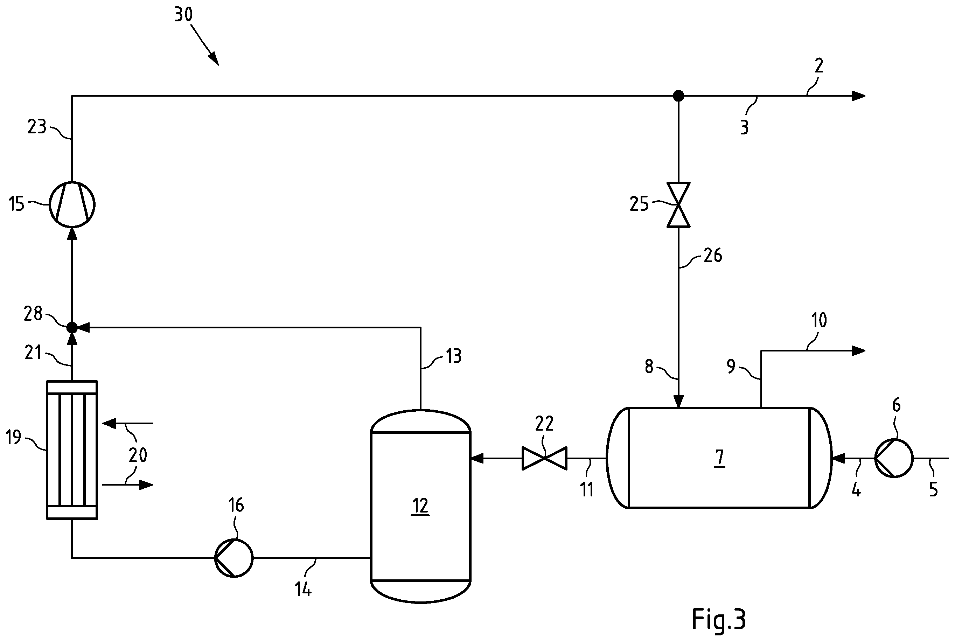

In der Fig. 3 ist eine alternative Dampferzeugungseinrichtung 30 dargestellt, die sich von der Dampferzeugungseinrichtung 1 der Fig. 2 dadurch unterscheidet, dass auf die Rücklaufleitung 27, den Dampfkessel 17, den im Dampfkessel 17 erzeugten Prozessdampf 18 und die Zusammenführung 24 des Prozessdampfs 18 mit dem im Verdichter 15 erzeugten Prozessdampf 23 verzichtet worden ist. Der Prozessdampf 3 der Dampferzeugungseinrichtung 30 wird mithin ausschließlich über den Verdichter 15 gebildet, wobei grundsätzlich auch mehrere Verdichter 15 vorgesehen sein könnten. In einem solchen Fall könnte auch vorgesehen sein, dass die Dampfphase 13 des Speisewassers 11 aus dem Flash-Tank 12 in wenigstens einem Verdichter 15 und der Rohdampf 21 in wenigstens einem anderen Verdichter 15 unabhängig voneinander verdichtet werden, auch wenn dies apparativ aufwendiger wäre, etwa wenn sehr viel Rohdampf 21 und ein sehr großer Massenstrom an Dampfphase 13 des Speisewassers 11 anfällt oder unterschiedliche Druckniveaus/Dampfnetze mit Prozessdampf versorgt werden sollen.

### Bezugszeichenliste

- 1: Dampferzeugungseinrichtung
- 2: Abgabevorrichtung
- 3: Prozessdampf
- 4: Kondensat
- 5: Rückführvorrichtung
- 6: Kondensatpumpe
- 7: Speisewasseraufbereitung
- 8: Heizdampf
- 9: Dampfphase
- 10: Brüdenableitung
- 11: Speisewasser
- 12: Flash-Tank
- 13: Dampfphase
- 14: Flüssigphase
- 15: Verdichter
- 16: Speisewasserpumpe
- 17: Dampfkessel
- 18: Prozessdampf Dampfkessel
- 19: Verdampfer
- 20: Wärmeträgermedium
- 21: Rohdampf
- 22: Drossel
- 23: Prozessdampf Verdichter
- 24: Zusammenführung
- 25: Drossel
- 26: Heizdampfzuleitung
- 27: Rücklaufleitung
- 28: Zusammenführung
- 30: Dampferzeugungseinrichtung

- A: industrielle Anlage
- G: Geothermalfluid
- P: industrieller Prozess
- V: Verbrauchereinrichtung
- W: Wärmereservoir

## Patentansprüche

1. Verfahren zur Erzeugung von Prozessdampf (3) unter Verwendung von in Form von Speisewasser (11) rückgeführtem Kondensat (4),
- bei dem der Prozessdampf (3) zur Bildung eines Kondensats (4) durch wenigstens teilweise Kondensation des Prozessdampfs (3) an eine Verbrauchereinrichtung (V) abgegeben wird,
- bei dem das Kondensat (4) aus der Verbrauchereinrichtung (V) einer Speisewasseraufbereitung (7) zur Aufbereitung zugeführt wird,
- bei dem Speisewasser (11) aus der Speisewasseraufbereitung (7) in einem Flash-Tank (12) in eine Dampfphase (13) und eine Flüssigphase (14) aufgetrennt wird,
- bei dem die Flüssigphase (14) des Speisewassers (11) in einem Verdampfer (19) unter Bildung eines Rohdampfs (21) verdampft wird und
- bei dem die Dampfphase (13) des Speisewassers (11) und der Rohdampf (21) in wenigstens einem Verdichter (15) unter Bildung von Prozessdampf (3) verdichtet werden.

2. Verfahren nach Anspruch 1,
- bei dem das Kondensat (4) in der Speisewasseraufbereitung (7) unter Bildung von Speisewasser (11), insbesondere durch Abtrennen von Sauerstoff (O₂) und/oder Kohlendioxid (CO₂), wenigstens teilweise entgast wird und
- bei dem, vorzugsweise, das Kondensat (4) der Speisewasseraufbereitung (7) zusammen mit einem Heizdampf (8) zum, insbesondere direkten Beheizen, des Kondensats (4) zugeführt wird.

3. Verfahren nach Anspruch 1 oder 2,
- bei dem das Kondensat (4) der Speisewasseraufbereitung (7) mit einer Temperatur zwischen 60 ° und 100 °C, vorzugsweise zwischen 70 °C und 80 °C, insbesondere von wenigstens im Wesentlichen 80 °C, zugeführt wird und/oder
- bei dem das Kondensat (4) in der Speisewasseraufbereitung (7) bei einem Druck zwischen 1 bar und 2 bar, vorzugsweise zwischen 1,1 und 1,5 bar, insbesondere von wenigstens im Wesentlichen 1,2 bar und/oder bei einer Temperatur von größer 100 °C, vorzugsweise zwischen 102 °C und 108 °C, insbesondere von wenigstens im Wesentlichen 105 °C, entgast wird.

4. Verfahren nach einem der Ansprüche 1 bis 3,
- bei dem der Flash-Tank (12) bei einem Druck zwischen 0,07 bar und 0,9 bar, vorzugsweise zwischen 0,12 bar und 0,8 bar, insbesondere von wenigstens im Wesentlichen 0,2 bar oder 0,6 bar, betrieben wird und/oder
- bei dem der Flash-Tank (12) bei einer Temperatur zwischen 40 °C und 96 °C, vorzugsweise zwischen 50 °C und 93,5 °C, insbesondere von wenigstens im Wesentlichen 60 °C oder 85,9 °C, betrieben wird.

5. Verfahren nach einem der Ansprüche 1 bis 4,
- bei dem der Verdichter (15) im Flashtank einen Unterdruck wenigstens im Vergleich zu dem Druck in der Speisewasseraufbereitung (7) zieht und/oder
- bei dem der wenigstens eine Verdichter (15) einen Prozessdampf (3) mit einer Temperatur zwischen 100 °C und 450 °C, vorzugsweise zwischen 100 °C und 250 °C, insbesondere wenigstens im Wesentlichen 200 °C, erzeugt.

6. Verfahren nach einem der Ansprüche 1 bis 5,
- bei dem der Heizdampf (8) der Speisewasseraufbereitung (7) wenigstens teilweise durch einen, insbesondere über eine Drossel (25) gedrosselten, Prozessdampf (3) und/oder Rohdampf (21) bereitgestellt wird.

7. Verfahren nach einem der Ansprüche 1 bis 6,
- bei dem die Flüssigphase (14) des Speisewassers (11) in dem Verdampfer (19) durch Wärmetausch mit einem Wärmeträgermedium (20), insbesondere Speisewasser (11), Wärmeströme aus Biomasseanlagen und/oder Wärmepumpen, Abwärmeströme, und/oder Geothermalfluid (G) verdampft wird und
- bei dem, vorzugsweise, das Geothermalfluid (G) eine Temperatur von mindestens 40 °C, vorzugsweise mindestens 60 °C, insbesondere mindestens 80 °C, aufweist.

8. Verfahren nach einem der Ansprüche 1 bis 7,
- bei dem das Speisewasser (11), insbesondere die Flüssigphase (14) des Speisewassers (11) aus dem Flash-Tank (12), teilweise wenigstens einem Dampfkessel (17) zugeführt und in dem wenigstens einen Dampfkessel (17) unter Bildung eines Prozessdampfs (3) verdampft wird und
- bei dem, vorzugsweise, der Prozessdampf (3) aus dem wenigstens einen Dampfkessel (17) und der Prozessdampf (3) aus dem wenigstens einen Verdichter (15) wenigstens teilweise zusammengeführt und über die Abgabevorrichtung (2) an die Verbrauchereinrichtung (V) abgegeben wird.

9. Dampferzeugungseinrichtung (1) zur Erzeugung von Prozessdampf (3) unter Verwendung von in Form von Speisewasser (11) rückgeführtem Kondensat (4), mit einem Verfahren nach einem der Ansprüche 1 bis 8, mit einem Flash-Tank (12) zum Auftrennen des Speisewassers (11) in eine Dampfphase (13) und eine Flüssigphase (14), mit einem Verdampfer (19) zum Verdampfen der Flüssigphase (14) des Speisewassers (11) unter Bildung eines Rohdampfs (21), mit wenigstens einem Verdichter (15) zum Verdichten der Dampfphase (13) des Speisewassers (11) und des Rohdampfs (21) unter Bildung von Prozessdampf (3), mit einer Abgabevorrichtung (2) an eine Verbrauchereinrichtung (V) zur Bildung eines Kondensats (4) durch Kondensation des Prozessdampfs (3), mit einer Rückführvorrichtung (5) zum Zuführen von Kondensat (4) und mit einer Speisewasseraufbereitung (7) zur Aufbereitung des Kondensats (4) unter Bildung des Speisewassers (11).

10. Dampferzeugungseinrichtung nach Anspruch 9, wobei die Speisewasseraufbereitung (7) eine Heizdampfzuleitung (26) zum, insbesondere direkten, Beheizen des Kondensats (4) und/oder eine Brüdenableitung (10) zum Abführen von aus dem Kondensat (4) ausgetriebenem Gas aufweist und wobei, vorzugsweise, der Heizdampfzuleitung (26) eine Drossel (25) zur Bildung von Heizdampf (8) durch Drosselung von Prozessdampf (3) zugeordnet ist.

11. Dampferzeugungseinrichtung nach Anspruch 9 oder 10, wobei eine Zusammenführung (28) für die Dampfphase (13) des Speisewassers (11) und den Rohdampf (21) vorgesehen ist und wobei, vorzugsweise, wenigstens ein Verdichter (15) zum gemeinsamen Verdichten der Dampfphase (13) des Speisewassers (11) und des Rohdampfs (21) nach der Zusammenführung (28) vorgesehen ist.

12. Dampferzeugungseinrichtung nach einem der Ansprüche 9 bis 11, wobei der Verdampfer (19) eine Zuleitung für Kondensat (4) zum Verdampfen der Flüssigphase (14) des Speisewassers (11) aufweist und zum Verdampfen der Flüssigphase (14) des Speisewassers (11) durch Wärmetausch mit dem über die Zuleitung zugeführten Kondensat (4) ausgebildet ist und/oder wobei der Verdampfer (19) eine Zuleitung für Speisewasser (11) zum Verdampfen der Flüssigphase (14) des Speisewassers (11) aufweist und zum Verdampfen der Flüssigphase (14) des Speisewassers (11) durch Wärmetausch mit dem über die Zuleitung zugeführten Speisewassers (11) ausgebildet ist und/oder wobei der Verdampfer (19) eine Zuleitung für Geothermalfluid (G) zum Verdampfen der Flüssigphase (14) des Speisewassers (11) aufweist und zum Verdampfen der Flüssigphase (14) des Speisewassers (11) durch Wärmetausch mit dem über die Zuleitung zugeführten Geothermalfluid (G) ausgebildet ist.

13. Dampferzeugungseinrichtung nach einem der Ansprüche 9 bis 12, wobei das Geothermalfluid (G) eine Temperatur mindestens 40 °C, vorzugsweise mindestens 60 °C, insbesondere mindestens 80 °C, aufweist.

## Claims

1. Method for generating process steam (3) using condensate (4) that is returned in the form of feed water (11),
- in which the process steam (3) is supplied to a consumer device (V) to form condensate (4) by at least partial condensation of the process steam (3),
- in which the condensate (4) is supplied from the consumer device (V) to a feed water treatment unit (7) for treatment,
- in which feed water (11) from the feed water treatment unit (7) is separated into a vapor phase (13) and a liquid phase (14) in a flash tank (12),
- in which the liquid phase (14) of the feed water (11) is evaporated in an evaporator (19) to form a raw steam (21), and
- in which the vapor phase (13) of the feed water (11) and the raw steam (21) are compressed in at least one compressor (15) to form process steam (3).

2. Method according to claim 1,
- in which the condensate (4) is at least partially degassed in the feed water treatment (7) to form feed water (11), in particular by separating oxygen (_{O₂}) and/or carbon dioxide (_{CO₂}), and
- in which, preferably, the condensate (4) is fed to the feed water treatment unit (7) together with heating steam (8) for, in particular, direct heating of the condensate (4).

3. Method according to claim 1 or 2,
- in which the condensate (4) is supplied to the feed water treatment unit (7) at a temperature between 60 °C and 100 °C, preferably between 70 °C and 80 °C, in particular at least substantially 80 °C, and/or
- in which the condensate (4) is degassed in the feed water treatment unit (7) at a pressure between 1 bar and 2 bar, preferably between 1.1 and 1.5 bar, in particular of at least substantially 1.2 bar, and/or at a temperature above 100 °C, preferably between 102 °C and 108 °C, in particular at least substantially 105 °C.

4. Method according to one of claims 1 to 3,
- in which the flash tank (12) is operated at a pressure between 0.07 bar and 0.9 bar, preferably between 0.12 bar and 0.8 bar, in particular at least substantially 0.2 bar or 0.6 bar, and/or
- in which the flash tank (12) is operated at a temperature between 40 °C and 96 °C, preferably between 50 °C and 93.5 °C, in particular at least substantially 60 °C or 85.9 °C.

5. Method according to one of claims 1 to 4,
- in which the compressor (15) generates a negative pressure in the flash tank, at least in comparison to the pressure in the feed water treatment unit (7) and/or
- in which the at least one compressor (15) generates process steam (3) with a temperature between 100 °C and 450 °C, preferably between 100 °C and 250 °C, in particular at least substantially 200 °C.

6. Method according to one of claims 1 to 5,
- in which the heating steam (8) of the feed water treatment unit (7) is provided at least partially by a process steam (3) and/or raw steam (21) in particular throttled via a throttle (25).

7. Method according to one of claims 1 to 6,
- in which the liquid phase (14) of the feed water (11) is evaporated in the evaporator (19) by heat exchange with a heat transfer medium (20), in particular feed water (11), heat flows from biomass plants and/or heat pumps, waste heat flows, and/or geothermal fluid (G), and
- wherein, preferably, the geothermal fluid (G) has a temperature of at least 40 °C, preferably at least 60 °C, in particular at least 80 °C.

8. Method according to one of claims 1 to 7,
- in which the feed water (11), in particular the liquid phase (14) of the feed water (11) from the flash tank (12), is partially supplied to at least one steam boiler (17) and evaporated in the at least one steam boiler (17) to form process steam (3), and
- in which, preferably, the process steam (3) from the at least one steam boiler (17) and the process steam (3) from the at least one compressor (15) are at least partially combined and delivered to the consumer device (V) via the delivery device (2).

9. Steam generation device (1) for generating process steam (3) using condensate (4) that is returned in the form of feed water (11), preferably using a method according to one of claims 1 to 8, with a flash tank (12) for separating the feed water (11) into a vapor phase (13) and a liquid phase (14), with an evaporator (19) for evaporating the liquid phase (14) of the feed water (11) to form raw steam (21), with at least one compressor (15) for compressing the vapor phase (13) of the feed water (11) and the raw steam (21) to form process steam (3), with a delivery device (2) for supplying the process steam (3) to a consumer device (V) for forming condensate (4) by condensation of the process steam (3), with a return device (5) for supplying the condensate (4), and with a feed water treatment unit (7) for treating the condensate (4) to form the feed water (11).

10. Steam generation device according to claim 9,
**characterized in that**
the feed water treatment unit (7) comprises a heating steam supply line (26) for, in particular, directly heating the condensate (4) and/or a vapor discharge line (10) for discharging gas expelled from the condensate (4), and that, preferably, the heating steam supply line (26) is associated with a throttle (25) for forming heating steam (8) by throttling process steam (3).

11. Steam generation device according to claim 9 or 10,
**characterized in that**
a merging (28) is provided for the vapor phase (13) of the feed water (11) and the raw steam (21), and that, preferably, at least one compressor (15) is provided for jointly compressing the vapor phase (13) of the feed water (11) and the raw steam (21) after the merging (28).

12. Steam generation device according to one of claims 9 to 11,
**characterized in that**
the evaporator (19) comprises a supply line for condensate (4) for evaporating the liquid phase (14) of the feed water (11), and the evaporator (19) is configured to evaporate the liquid phase (14) of the feedwater (11) by heat exchange with the condensate (4) supplied via the supply line, and/or that the evaporator (19) comprises a supply line for feed water (11) for evaporating the liquid phase (14) of the feed water (11), and the evaporator (19) is configured to evaporate the liquid phase (14) of the feedwater (11) by heat exchange with the feedwater (11) supplied via the supply line, and/or that the evaporator (19) comprises a supply line for geothermal fluid (G) for evaporating the liquid phase (14) of the feed water (11), and the evaporator (19) is configured to evaporate the liquid phase (14) of the feedwater (11) by heat exchange with the geothermal fluid (G) supplied via the supply line.

13. Steam generation device according to one of claims 9 to 12,
**characterized in that**
the geothermal fluid (G) has a temperature of at least 40 °C, preferably at least 60 °C, in particular at least 80 °C.

## Revendications

1. Procédé de production de vapeur de procédé (3) utilisant du condensat (4) recyclé sous forme d'eau d'alimentation (11),
- dans lequel la vapeur de procédé (3) est délivrée à un dispositif de consommation (V) pour former un condensat (4) par condensation au moins partielle de la vapeur de procédé (3),
- dans lequel le condensat (4) provenant du dispositif de consommation (V) est acheminé vers un dispositif de traitement d'eau d'alimentation (7) en vue de son traitement,
- dans lequel l'eau d'alimentation (11) provenant du unité de traitement d'eau d'alimentation (7) est séparée dans un ballon de détente (12) en une phase vapeur (13) et une phase liquide (14),
- dans lequel la phase liquide (14) de l'eau d'alimentation (11) est évaporée dans un évaporateur (19) avec formation d'une vapeur brute (21) et
- dans lequel la phase vapeur (13) de l'eau d'alimentation (11) et la vapeur brute (21) sont comprimées dans au moins un compresseur (15) pour former de la vapeur de procédé (3).

2. Procédé selon la revendication 1,
- dans lequel le condensat (4) est au moins partiellement dégazé dans l' unité de traitement d'eau d'alimentation (7) pour former de l'eau d'alimentation (11), en particulier par séparation de l'oxygène (O₂ ) et/ou du dioxyde de carbone (CO₂ ), et
- dans lequel, de préférence, le condensat (4) est acheminé vers l'unité de traitement d'eau d'alimentation (7) avec une vapeur de chauffage (8) pour, en particulier, chauffer directement le condensat (4).

3. Procédé selon la revendication 1 ou 2,
- dans lequel le condensat (4) de l'unité de traitement d'eau d'alimentation (7)est acheminé à une température comprise entre 60 °C et 100 °C, de préférence entre 70 °C et 80 °C, en particulier d'au moins essentiellement 80 °C, et/ou
- dans lequel le condensat (4) est dégazé dans l' unité de traitement d'eau d'alimentation (7) à une pression comprise entre 1 bar et 2 bars, de préférence entre 1,1 et 1,5 bar, en particulier d'au moins essentiellement 1,2 bar, et/ou à une température supérieure à 100 °C, de préférence comprise entre 102 °C et 108 °C, en particulier d'au moins essentiellement 105 °C.

4. Procédé selon l'une des revendications 1 à 3,
- dans lequel le ballon de détente (12) est exploité à une pression comprise entre 0,07 bar et 0,9 bar, de préférence entre 0,12 bar et 0,8 bar, en particulier d'au moins essentiellement 0,2 bar ou 0,6 bar, et/ou
- dans lequel le ballon de détente (12) est exploité à une température comprise entre 40 °C et 96 °C, de préférence entre 50 °C et 93,5 °C, en particulier d'au moins essentiellement 60 °C ou 85,9 °C.

5. Procédé selon l'une des revendications 1 à 4,
- dans lequel le compresseur (15) crée une dépression dans le ballon de détente au moins par rapport à la pression dans l'unité de traitement d'eau d'alimentation (7) et/ou
- dans lequel le au moins un compresseur (15) produit une vapeur de procédé (3) à une température comprise entre 100 °C et 450 °C, de préférence entre 100 °C et 250 °C, en particulier au moins essentiellement à 200 °C.

6. Procédé selon l'une des revendications 1 à 5,
- dans lequel la vapeur de chauffage (8) de l'unité de traitement d'eau d'alimentation (7) est fournie au moins en partie par une vapeur de procédé (3) et/ou une vapeur brute (21) étranglée, en particulier par un étranglement (25).

7. Procédé selon l'une des revendications 1 à 6,
- dans lequel la phase liquide (14) de l'eau d'alimentation (11) est évaporée dans l'évaporateur (19) par échange thermique avec un fluide caloporteur (20), en particulier de l'eau d'alimentation (11), des flux thermiques provenant d'installations de biomasse et/ou de pompes à chaleur, des flux de chaleur résiduelle et/ou un fluide géothermique (G), et
- dans lequel, de préférence, le fluide géothermique (G) présente une température d'au moins 40 °C, de préférence d'au moins 60 °C, en particulier d'au moins 80 °C.

8. Procédé selon l'une des revendications 1 à 7,
- dans lequel l'eau d'alimentation (11), en particulier la phase liquide (14) de l'eau d'alimentation (11) provenant du ballon de détente (12), est partiellement acheminée vers au moins une chaudière à vapeur (17) et évaporée dans ladite au moins une chaudière à vapeur (17) pour former une vapeur de procédé (3), et
- dans lequel, de préférence, la vapeur de procédé (3) provenant de la au moins une chaudière à vapeur (17) et la vapeur de procédé (3) provenant du au moins un compresseur (15) sont au moins partiellement réunies et délivrées au dispositif de consommation(V) par l'intermédiaire du dispositif de distribution (2).

9. Dispositif de production de vapeur (1) pour produire de la vapeur de procédé (3) en utilisant du condensat (4) recyclé sous forme d'eau d'alimentation (11), de préférence selon un procédé selon l'une des revendications 1 à 8, comprenant un ballon de détente (12) pour séparer l'eau d'alimentation (11) en une phase vapeur (13) et une phase liquide (14), un évaporateur (19) pour évaporer la phase liquide (14) de l'eau d'alimentation (11) en formant une vapeur brute (21), avec au moins un compresseur (15) pour comprimer la phase vapeur (13) de l'eau d'alimentation (11) et la vapeur brute (21) en formant de la vapeur de procédé (3), avec un dispositif de distribution (2) vers un dispositif de consommation(V) pour former un condensat (4) par condensation de la vapeur de procédé(3), avec un dispositif de retour (5) pour acheminer le condensat (4) et avec uneunité de traitement d'eau d'alimentation (7) pour traiter le condensat (4) en formant l'eau d'alimentation (11).

10. Dispositif de production de vapeur selon la revendication 9,
**caractérisé en ce que**
l'unité de traitement d'eau d'alimentation (7)) comporte une conduite d'alimentation en vapeur de chauffage (26) pour chauffer, en particulier directement, le condensat (4) et/ou une conduite d'évacuation des vapeurs (10) pour évacuer les gaz expulsés du condensat (4), et **en ce que**, de préférence, un étranglement (25) est associé à la conduite d'alimentation en vapeur de chauffage (26) pour former de la vapeur de chauffage (8) par étranglement de la vapeur de procédé (3).

11. Dispositif de production de vapeur selon la revendication 9 ou 10,
**caractérisé en ce que**
une jonction (28) est prévue pour la phase vapeur (13) de l'eau d'alimentation (11) et la vapeur brute (21) et que, de préférence, au moins un compresseur (15) est prévu pour comprimer conjointement la phase vapeur (13) de l'eau d'alimentation (11) et la vapeur brute (21) après la jonction (28).

12. Dispositif de production de vapeur selon l'une des revendications 9 à 11,
**caractérisé en ce que**
l'évaporateur (19) comporte une conduite d'alimentation en condensat (4) pour évaporer la phase liquide (14) de l'eau d'alimentation (11) et est conçu pour évaporer la phase liquide (14) de l'eau d'alimentation (11) par échange thermique avec le condensat acheminé par la conduite d'alimentation (4) acheminé via la conduite d'alimentation et/ou que l'évaporateur (19) comporte une conduite d'alimentation en eau d'alimentation (11) pour évaporer la phase liquide (14) de l'eau d'alimentation (11) et pour évaporer la phase liquide (14) de l'eau d'alimentation (11) par échange thermique avec l'eau d'alimentation (11) amenée par la conduite d'alimentation et/ou **en ce que** l'évaporateur (19) comporte une conduite d'alimentation pour le fluide géothermique (G) pour évaporer l' phase liquide (14) de l'eau d'alimentation (11) et est conçu pour évaporer la phase liquide (14) de l'eau d'alimentation (11) par échange thermique avec le fluide géothermique (G) acheminé par la conduite d'alimentation.

13. Dispositif de production de vapeur selon l'une des revendications 9 à 12,
**caractérisé en ce que**
le fluide géothermique (G) présente une température d'au moins 40 °C, de préférence d'au moins 60 °C, en particulier d'au moins 80 °C.
